# EUROPEAN PATENT SPECIFICATION

(11) **EP 3 095 987 B1**
(45) Date of publication and mention of the grant of the patent: **23.09.2020**
(21) Application number: 16169762.8
(22) Date of filing: 16.05.2016
(51) Int. Cl.: F02C 7/22, F02C 7/224, F02C 3/30, F02C 9/40

(54) **GAS TURBINE ENGINE LIQUID FUEL SUPPLY SYSTEM AND METHOD**
BRENNSTOFFZUFUHRSYSTEM UND VERFAHREN FÜR EINEN GASTURBINENMOTOR
SYSTÈME ET PROCÉDÉ D'ALIMENTATION EN COMBUSTIBLE LIQUIDE D'UNE TURBINE À GAZ

(30) Priority: 20.05.2015 US 201514717570
(43) Date of publication of application: 23.11.2016
(73) Proprietor: General Electric Company, Schenectady, NY 12345 (US)
(72) Inventor: SELFRIDGE, Kenneth Eugene, Greenville, SC South Carolina 29615 (US); ZHANG, Hua, Greenville, SC South Carolina 29615 (US)
(74) Representative: BRP Renaud & Partner mbB Rechtsanwälte Patentanwälte Steuerberater

(56) References cited:
- US-A1- 2011 314 833
- US-A1- 2013 097 991
- US-A1- 2013 098 040
- US-A1- 2014 090 387
- US-A1- 2014 208 762

## Description

### BACKGROUND OF THE DISCLOSURE

The subject matter disclosed herein relates to gas turbine engines and, more particularly, to a liquid fuel supply system, as well as a method of supplying liquid fuel in a gas turbine engine.

During various operating conditions of a dual fuel gas turbine engine, it is required that liquid fuel is inhibited from entering a liquid fuel manifold. Examples of such operations include during gas fuel operation of the gas turbine engine or during a purge credit mode of the combustor assembly. This is done to protect the liquid fuel combustor nozzles and liquid fuel mixing valves. To block the liquid fuel from entering these locations, a valve assembly is employed upstream of these components and downstream of a liquid fuel supply.

US 2014/0090387 A1 describes a system with a combustor with a liquid fuel injection arrangement for injecting liquid fuel into the combustor and an injection system for the injection of water into the combustor. In the system, exhaust gases are used to heat water which is used to heat the liquid fuel and the water and the heated liquid fuel are separately injected into the combustor.

In the system of US 2013/0097991 A1 which is comprising a mixing assembly for mixing liquid fuel and water, valves are used for preventing flow of the liquid fuel to manifolds of the system.

US 2011/0314833 A1 describes an additive injection system with an atomizing air connection and an additive source coupled in flow connection with said atomizing air connection.

US 2013/0098 040 A1 describes a system with a gas turbine having a combustor, wherein the system further comprises a liquid fuel supply coupled to the combustor and a water supply coupled to the liquid fuel supply which is configured to flow water through the liquid fuel supply while the liquid fuel supply is not in use to flow a liquid fuel. To prevent the liquid fuel from flowing to the combustor, a valve is arranged in the liquid fuel supply.

A fluid may be routed to the liquid fuel manifold to pressurize the manifold when it is desirable to prevent liquid fuel from entering the fuel manifold or passing further downstream to the liquid fuel combustor nozzles. Upon initiation of a liquid fuel operation of the gas turbine engine, liquid fuel is to be routed to the combustor. Prior to doing so, the fluid disposed in the liquid fuel manifold must be removed to provide a clear path for the liquid fuel. Typically, this is done by completely draining the fluid from liquid fuel manifold and subsequently filling the manifold with liquid fuel. Unfortunately, the fluid draining procedure may account for a significant amount of time that is allotted for the transition to the liquid fuel operation, with the possibility of even exceeding the allotted time. Therefore, the delay associated with draining the fluid is an undesirable aspect for operators of gas turbine engines.

### BRIEF DESCRIPTION OF THE DISCLOSURE

Aspects of the invention provide a method and a system in accordance with claims 1 and 9 respectively.

According to one aspect of the disclosure, a method of supplying liquid fuel in a gas turbine engine is provided and includes sealing a fuel manifold with a fluid in the fuel manifold. The method also includes initiating routing of a liquid fuel from a liquid fuel supply structure to the fuel manifold. The method further includes displacing the fluid disposed in the fuel manifold with the liquid fuel. The method yet further includes routing the liquid fuel and the fluid into a combustor.

According to another aspect of the disclosure, a method of supplying liquid fuel in a gas turbine engine is provided and includes sealing a fuel manifold with a water in the fuel manifold. The method also includes initiating routing of a liquid fuel from a liquid fuel supply structure to the fuel manifold. The method further includes displacing the water disposed in the fuel manifold with the liquid fuel, wherein displacing the water comprises routing the liquid fuel to the fuel manifold at varying flow rates. The method yet further includes routing the liquid fuel and the water into a combustor.

According to yet another aspect of the disclosure, a fuel supply system for a gas turbine engine includes a liquid fuel supply structure containing a liquid fuel. The fuel supply system also includes a combustor. The fuel supply system further includes a fuel manifold fluidly coupled to the liquid fuel supply structure to receive the liquid fuel and fluidly coupled to the combustor for selective distribution of the liquid fuel to the combustor. The fuel supply system yet further includes a liquid supply structure containing a liquid different from the liquid fuel, the liquid supply structure fluidly coupled to the fuel manifold for routing of the liquid to the fuel manifold, wherein the liquid fuel and the liquid are routed to the combustor upon initiation of routing the liquid fuel to the combustor.

These and other advantages and features will become more apparent from the following description taken in conjunction with the drawings.

### BRIEF DESCRIPTION OF THE DRAWINGS

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
- FIG. 1: is a schematic illustration of a gas turbine engine;
- FIG. 2: is a fuel supply system of the gas turbine engine in a first operating condition;
- FIG. 3: is the fuel supply system in a second operating condition;
- FIG. 4: is a plot of a first liquid fuel flow profile; and
- FIG. 5: is a plot of a second liquid fuel flow profile.

The detailed description explains embodiments of the disclosure, together with advantages and features, by way of example with reference to the drawings.

### DETAILED DESCRIPTION OF THE DISCLOSURE

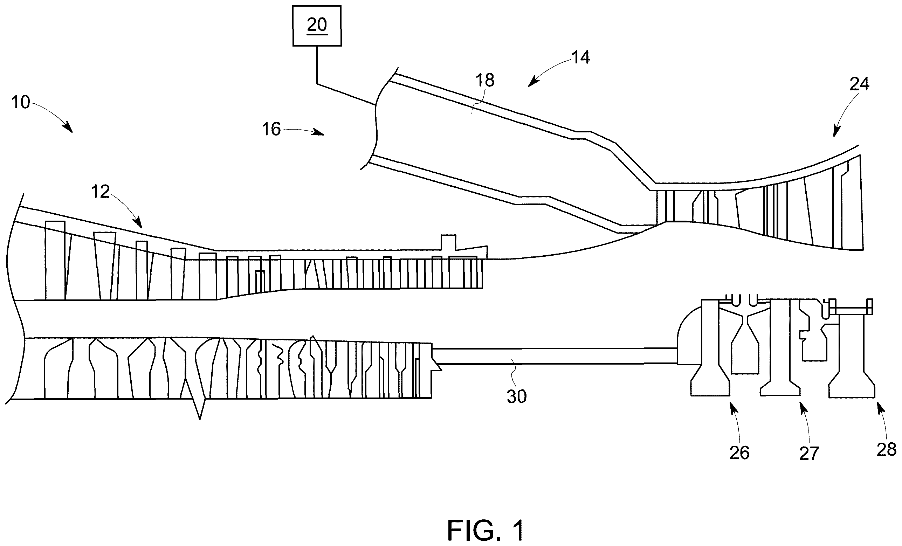

Referring to FIG. 1, a turbine system, such as a gas turbine engine 10, constructed in accordance with an exemplary embodiment of the present disclosure is schematically illustrated. The gas turbine engine 10 includes a compressor section 12 and a plurality of combustor assemblies arranged in a can annular array, one of which is indicated at 14. The combustor assembly is configured to receive fuel from a fuel supply system 20 through at least one fuel nozzle and a compressed air from the compressor section 12. The fuel and compressed air are passed into a combustor chamber 18 defined by a combustor liner and ignited to form a high temperature, high pressure combustion product or air stream that is used to drive a turbine 24. The turbine 24 includes a plurality of stages 26-28 that are operationally connected to the compressor 12 through a compressor/turbine shaft 30 (also referred to as a rotor).

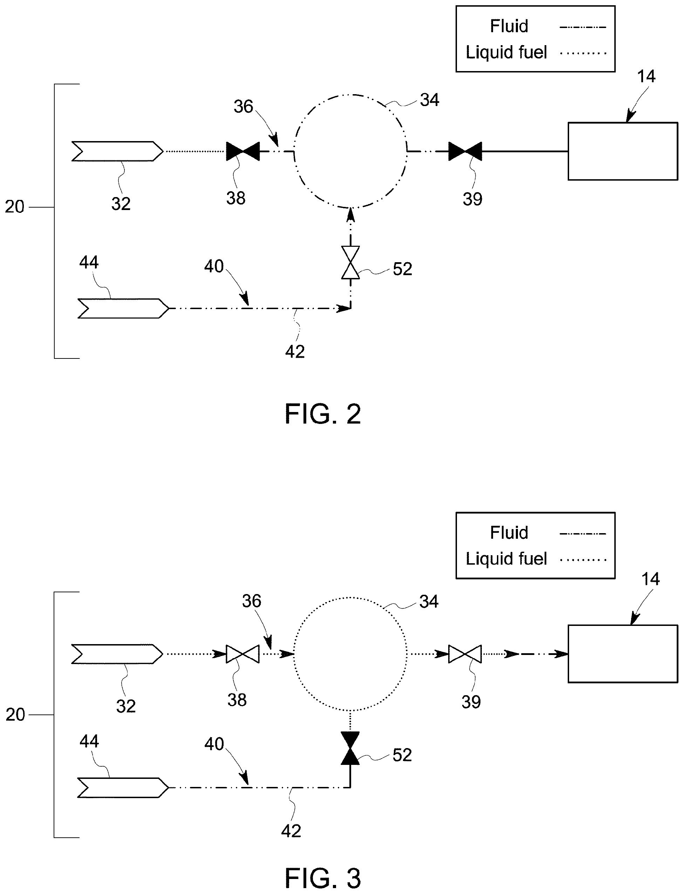

In operation, air flows into the compressor 12 and is compressed into a high pressure gas. The high pressure gas is supplied to the combustor assembly 14 and mixed with fuel, for example natural gas, fuel oil, process gas and/or synthetic gas (syngas), in the combustor chamber 18. The fuel/air or combustible mixture ignites to form a high pressure, high temperature combustion gas stream, which is channeled to the turbine 24 and converted from thermal energy to mechanical, rotational energy. As will be appreciated from the description herein, the fuel provided is a liquid fuel, but it is to be appreciated that embodiments of the gas turbine engine 10 employ both liquid fuel and gas fuel, which may be employed during different operating conditions. Referring now to FIGS. 2 and 3, the fuel supply system 20 is illustrated in greater detail. The fuel supply system 20 includes a liquid fuel supply structure 32 that stores and distributes liquid fuel. The liquid fuel supply structure 32 is fluidly coupled to a liquid fuel manifold 34 with a liquid fuel piping arrangement 36. One or more valves 38 are included along the liquid fuel piping arrangement 36 between the liquid fuel supply structure 32 and the liquid fuel manifold 34 to selectively transition between an open condition and a closed condition to control the flow rate of liquid fuel to the liquid fuel manifold 34. Additionally, at least one valve 39 is included along the liquid fuel piping arrangement 36 between the liquid fuel manifold 34 and the combustor chamber 18 to selectively transition between an open condition and a closed condition to control the flow rate of the liquid fuel to the combustor chamber 18. As will be appreciated from the description herein, the valve 39 also controls the flow rate of a fluid that is disposed in the liquid fuel manifold 34.

The valves 38, 39 are in the closed condition when the gas turbine engine 10 is operating in a condition other than liquid fuel operation. For example, this may occur during gas fuel operation of the gas turbine engine 10 or during a purge credit mode of the combustor assembly 14.

To reduce or eliminate the likelihood that liquid fuel undesirably leaks into or through the liquid fuel manifold 34 during a closed condition of the valves 38, 39, pressurization of the liquid fuel manifold 34 is provided with a purge system 40. The purge system 40 is fluidly coupled to the combustor assembly 14 and is configured to purge various portions of the combustor assembly 14 with a liquid, such as water, via a water manifold. More specifically, the water is demineralized water in certain embodiments. The purge system 40 includes a fluid supply line 42 (e.g., water supply line) that is fluidly coupled to a fluid supply 44 (e.g., water supply) and the liquid fuel manifold 34. A fluid valve 52 is provided between the fluid supply 44 and the liquid fuel manifold 34 to control the flow rate of fluid to the liquid fuel manifold 34. The fluid valve 52 (e.g., water valve) transitions between an open state and a closed state to selectively control the flow rate of the fluid to the liquid fuel manifold 34.

The fluid is pumped to the liquid fuel manifold 34 to pressurize the components therein. Pressurization opposes any leaked portion of the liquid fuel that tends to pass through the valve 38, thereby reducing the likelihood of ingress of the liquid fuel to the liquid fuel manifold 34 from upstream locations along the liquid fuel piping arrangement 36. To effectively seal the liquid fuel manifold 34 from the leaked portion of liquid fuel, the fluid pumped to the liquid fuel manifold 34 must exceed the internal pressure of the liquid fuel piping arrangement 36, which may vary depending upon the particular application and operating conditions.

In FIG. 2, the fuel supply system 20 is illustrated in a first operating condition that defines a non-liquid fuel operation condition of the gas turbine engine 10. FIG. 3 illustrates initiation of the liquid fuel operating condition, with the fluid being displaced from the liquid fuel manifold 34 by the pressure of the oncoming liquid fuel.

During a gas turbine engine starting operation or transfer to a liquid fuel operation, the fluid disposed in the liquid fuel manifold 34 must be removed to clear a path for the liquid fuel that is to be routed to the combustor assembly 14. Rather than wasting time with draining the fluid, the embodiments described herein simply employ the pressure of the liquid fuel to displace the fluid. This is done by opening the valves 38, 39. The liquid fuel and the fluid are then routed into the combustor assembly 14. Elimination or reduction of the draining process advantageously reduces the time required for initiation of a liquid fuel operation of the gas turbine engine 10, whether during a fast start of the gas turbine engine 10 or during a transition from gas fuel operation to liquid fuel operation. While it is contemplated that some of the fluid may be drained, typically all of the fluid is routed to the combustor assembly 14.

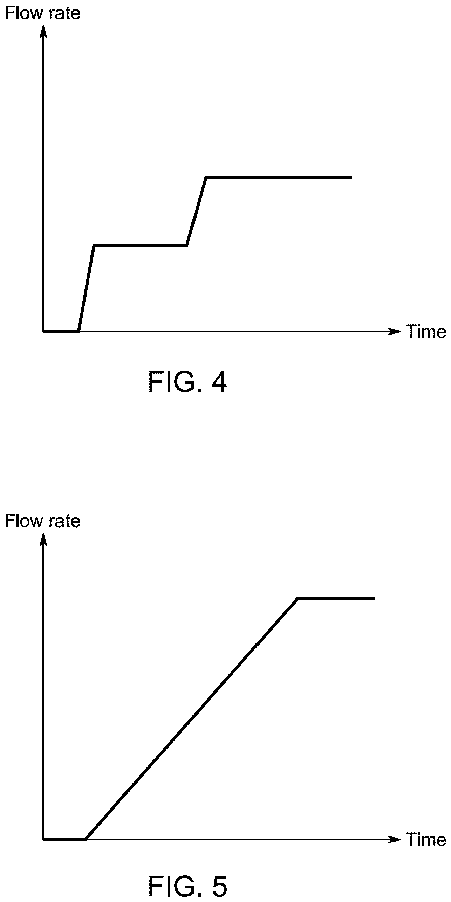

As described above, routing of the liquid fuel to the liquid fuel manifold 34 comprises opening the valve 38. When done in conjunction with opening of valve 39, the liquid fuel and the fluid are routed to the combustor assembly 14. The valve 38 is configured to allow for control of the flow rate of the liquid fuel. In one embodiment, the flow rate is constant over the entire fluid removal process. However, in some embodiments it is advantageous to vary the flow rate of the liquid fuel during initiation of the liquid fuel operating condition. The advantages may be associated with the fuel supply profile required and/or with displacement characteristics of the fluid from the liquid fuel manifold 34. For example, FIGS. 4 and 5 illustrate two exemplary liquid fuel flow rate profiles. In particular, FIG. 4 shows the liquid fuel being routed to the liquid fuel manifold 34 in a stepped profile. Although only two distinct flow rates are illustrated, it is to be appreciated that more "steps" may be included in the flow profile. In FIG. 5, a constantly varying flow rate is illustrated. The specific flow rate profile of the liquid fuel during displacement of the fluid in the liquid fuel manifold will depend upon the particular application. Although illustrating an increasing flow rate over time, it is to be understood that the flow rate may decrease over time and that a combination of increasing and decreasing (e.g., pulsed flow) may be employed.

Advantageously, start or transition time for a liquid fuel operation is reduced by avoiding the need to completely drain the liquid fuel piping arrangement 36, including the liquid fuel manifold 34, of the fluid disposed therein during sealing of the arrangement. In some applications, operators of the gas turbine engine 10 are sensitive to this response time to the degree of seconds. Therefore, even small amounts of reduced time periods are greatly desired by operators in some instances. While the disclosure has been described in detail in connection with only a limited number of embodiments, it should be readily understood that the disclosure is not limited to such disclosed embodiments.

Additionally, while various embodiments of the disclosure have been described, it is to be understood that aspects of the disclosure may include only some of the described embodiments. Accordingly, the disclosure is not to be seen as limited by the foregoing description, but is only limited by the scope of the appended claims.

## Claims

1. A method of supplying liquid fuel in a gas turbine engine (10) by means of a fuel supply system according to claim 9, comprising:
sealing a fuel manifold (34) with a fluid in the fuel manifold;
initiating routing of a liquid fuel from a liquid fuel supply structure (32) to the fuel manifold;
displacing the fluid disposed in the fuel manifold for the sealing with the liquid fuel to clear a path for the liquid fuel that is to be routed to a combustor (18); and
routing the liquid fuel and the displaced fluid into the combustor (18).

2. The method of claim 1, wherein the fluid comprises water.

3. The method of claim 1, wherein the fluid comprises demineralized water.

4. The method of claim 1, 2 or 3, wherein the initiating routing of the liquid fuel occurs during a transition from a gas fuel operation of the combustor to a liquid fuel operation of the combustor.

5. The method of claim 1, 2 or 3, wherein the initiating routing of the liquid fuel occurs subsequent to a purging of the fuel manifold.

6. The method of any preceding claim, wherein all of the fluid in the fuel manifold is routed to the combustor.

7. The method of any preceding claim, wherein initiating routing of the liquid fuel comprises opening a first valve (38) located between the liquid fuel supply structure and the fuel manifold.

8. The method of any preceding claim, wherein routing the liquid fuel and the fluid into the combustor comprises opening a second valve (39) located between the fuel manifold and the combustor.

9. A fuel supply system for a gas turbine engine (10) comprising:
a liquid fuel supply structure (32) containing a liquid fuel;
a combustor (18);
a fuel manifold (34) fluidly coupled to the liquid fuel supply structure to receive the liquid fuel and fluidly coupled to the combustor for selective distribution of the liquid fuel to the combustor; and
a fluid supply structure (44) containing a fluid different from the liquid fuel, the fluid supply structure fluidly coupled to the fuel manifold for routing of the fluid to the fuel manifold, wherein the system is configured to seal the fuel manifold (34) with the fluid against passage of liquid fuel, and wherein the system is configured to upon initiation of routing the liquid fuel to the combustor (18) displace the fluid previously disposed in the fuel manifold (34) for the sealing with the liquid fuel to clear a path for the liquid fuel that is to be routed to the combustor (18), and to route the liquid fuel and the displaced fluid to the combustor (18).

10. The fuel supply system of claim 9, wherein all of the fluid in the fuel manifold is routed to the combustor.

11. The fuel supply system of claim 9, wherein the fluid is water.

12. The fuel supply system of claim 9, wherein the fluid is demineralized water.

## Patentansprüche

1. Verfahren zum Zuführen von Flüssigbrennstoff in einem Gasturbinentriebwerk (10) mittels eines Brennstoffzufuhrsystems nach Anspruch 9, umfassend:
Abdichten eines Brennstoffverteilers (34) mit einem Fluid im Brennstoffverteiler;
Auslösen des Leitens eines Flüssigbrennstoffs von einer Flüssigbrennstoffzufuhrstruktur (32) zum Brennstoffverteiler;
Verdrängen des im Brennstoffverteiler zur Abdichtung befindlichen Fluids mit dem Flüssigbrennstoff, um für den Flüssigbrennstoff, der zu einer Brennkammer (18) geleitet werden soll, einen Weg freizumachen; und
Leiten des Flüssigbrennstoffs und des verdrängten Fluids in die Brennkammer (18).

2. Verfahren nach Anspruch 1, wobei das Fluid Wasser umfasst.

3. Verfahren nach Anspruch 1, wobei das Fluid demineralisiertes Wasser umfasst.

4. Verfahren nach Anspruch 1, 2 oder 3, wobei das Auslösen des Leitens des Flüssigbrennstoffs während eines Übergangs von einem Gasbrennstoffbetrieb der Brennkammer zu einem Flüssigbrennstoffbetrieb der Brennkammer erfolgt.

5. Verfahren nach Anspruch 1, 2 oder 3, wobei das Auslösen des Leitens des Flüssigbrennstoffs im Anschluss an ein Spülen des Brennstoffverteilers erfolgt.

6. Verfahren nach einem der vorstehenden Ansprüche, wobei das gesamte Fluid im Brennstoffverteiler zur Brennkammer geleitet wird.

7. Verfahren nach einem der vorstehenden Ansprüche, wobei das Auslösen des Leitens des Flüssigbrennstoffs ein Öffnen eines ersten Ventils (38) zwischen der Flüssigbrennstoffzufuhrstruktur und dem Brennstoffverteiler umfasst.

8. Verfahren nach einem der vorstehenden Ansprüche, wobei das Leiten des Flüssigbrennstoffs und des Fluids in die Brennkammer ein Öffnen eines zweiten Ventils (39) zwischen dem Brennstoffverteiler und der Brennkammer umfasst.

9. Brennstoffzufuhrsystem für ein Gasturbinentriebwerk (10), umfassend:
eine Flüssigbrennstoffzufuhrstruktur (32), die einen Flüssigbrennstoff enthält;
eine Brennkammer (18);
einen Brennstoffverteiler (34), der fluidisch mit der Flüssigbrennstoffzufuhrstruktur verbunden ist, um den Flüssigbrennstoff aufzunehmen, und zur selektiven Verteilung des Flüssigbrennstoffs zur Brennkammer fluidisch mit der Brennkammer verbunden ist; und
eine Fluidzufuhrstruktur (44), die ein vom Flüssigbrennstoff verschiedenes Fluid enthält, wobei die Fluidzufuhrstruktur fluidisch mit dem Brennstoffverteiler verbunden ist, um das Fluid zum Brennstoffverteiler zu leiten, wobei das System so eingerichtet ist, dass der Brennstoffverteiler (34) mit dem Fluid gegen einen Durchgang von Flüssigbrennstoff abgedichtet wird, und wobei das System so eingerichtet ist, dass nach Auslösung des Leitens von Flüssigbrennstoff in die Brennkammer (18) das zuvor im Brennstoffverteiler (34) für die Abdichtung befindliche Fluid mit dem Flüssigbrennstoff verdrängt wird, um für den Flüssigbrennstoff, der zur Brennkammer (18) geleitet werden soll, einen Weg freizumachen und den Flüssigbrennstoff und das verdrängte Fluid zur Brennkammer (18) zu leiten.

10. Brennstoffzufuhrsystem nach Anspruch 9, wobei das gesamte Fluid im Brennstoffverteiler zur Brennkammer geleitet wird.

11. Brennstoffzufuhrsystem nach Anspruch 9, wobei das Fluid Wasser ist.

12. Brennstoffzufuhrsystem nach Anspruch 9, wobei das Fluid demineralisiertes Wasser ist.

## Revendications

1. Procédé d'alimentation en carburant liquide dans un moteur de turbine à gaz (10) au moyen d'un système d'alimentation en carburant selon la revendication 9, comprenant :
le scellement d'un collecteur de carburant (34) avec un fluide dans le collecteur de carburant ;
le lancement de l'acheminement d'un carburant liquide depuis une structure d'alimentation en carburant liquide (32) vers le collecteur de carburant ;
le déplacement du fluide disposé dans le collecteur de carburant pour le scellement avec le carburant liquide pour dégager une voie pour le carburant liquide qui doit être acheminé vers une chambre de combustion (18) ; et
l'acheminement du carburant liquide et du fluide déplacé dans la chambre de combustion (18).

2. Procédé selon la revendication 1, dans lequel le fluide comprend de l'eau.

3. Procédé selon la revendication 1, dans lequel le fluide comprend de l'eau dém inéralisée.

4. Procédé selon la revendication 1, 2 ou 3, dans lequel le lancement de l'acheminement du carburant liquide se produit pendant une transition d'un fonctionnement au carburant gazeux de la chambre de combustion à un fonctionnement au carburant liquide de la chambre de combustion.

5. Procédé selon la revendication 1, 2 ou 3, dans lequel le lancement de l'acheminement du carburant liquide se produit à la suite d'une purge du collecteur de carburant.

6. Procédé selon l'une quelconque des revendications précédentes, dans lequel la totalité du fluide dans le collecteur de carburant est acheminée vers la chambre de combustion.

7. Procédé selon l'une quelconque des revendications précédentes, dans lequel le lancement de l'acheminement du carburant liquide comprend l'ouverture d'une première soupape (38) située entre la structure d'alimentation en carburant liquide et le collecteur de carburant.

8. Procédé selon l'une quelconque des revendications précédentes, dans lequel l'acheminement du carburant liquide et du fluide dans la chambre de combustion comprend l'ouverture d'une seconde soupape (39) située entre le collecteur de carburant et la chambre de combustion.

9. Système d'alimentation en carburant pour un moteur de turbine à gaz (10) comprenant :
une structure d'alimentation en carburant liquide (32) contenant un carburant liquide ;
une chambre de combustion (18) ;
un collecteur de carburant (34) couplé de manière fluidique à la structure d'alimentation en carburant liquide pour recevoir le carburant liquide et couplé de manière fluidique à la chambre de combustion pour une distribution sélective du carburant liquide à la chambre de combustion ; et
une structure d'alimentation en fluide (44) contenant un fluide différent du carburant liquide, la structure d'alimentation en fluide étant couplée de manière fluidique au collecteur de carburant pour l'acheminement du fluide vers le collecteur de carburant, dans lequel le système est configuré pour sceller le collecteur de carburant (34) avec le fluide contre le passage de carburant liquide, et dans lequel le système est configuré lors du lancement de l'acheminement du carburant vers la chambre de combustion (18) pour déplacer le fluide précédemment disposé dans le collecteur de carburant (34) pour le scellement avec le carburant liquide pour dégager une voie pour le carburant liquide qui doit être acheminé vers la chambre de combustion (18), et pour acheminer le carburant liquide et le fluide déplacé vers la chambre de combustion (18).

10. Système d'alimentation en carburant selon la revendication 9, dans lequel la totalité du fluide dans le collecteur de carburant est acheminée vers la chambre de combustion.

11. Système d'alimentation en carburant selon la revendication 9, dans lequel le fluide est de l'eau.

12. Système d'alimentation en carburant selon la revendication 9, dans lequel le fluide est de l'eau déminéralisée.
